# NEUE EUROPÄISCHE PATENTSCHRIFT

(11) **EP 0 298 024 B2**
(45) Veröffentlichungstag und Bekanntmachung des Hinweises auf die Entscheidung über den Einspruch: **19.06.1996**
(45) Hinweis auf die Patenterteilung: 29.05.1991
(21) Anmeldenummer: 88810385.0
(22) Anmeldetag: 10.06.1988
(51) Int. Cl.: C09J 7/00, C09J 5/06

(54) **Versteifungskörper**
Reinforcing element
Elément de renforcement

(30) Priorität: 19.06.1987 DE 3720267; 06.06.1988 CH 2155/88
(43) Veröffentlichungstag der Anmeldung: 04.01.1989
(73) Patentinhaber: Gurit-Essex AG, CH-8807 Freienbach (CH)
(72) Erfinder: Rohrer, Paul, Dr.,Dipl. Ing., CH-8704 Herrliberg (CH); Haelg, Paul, Dr.,Dipl. Ing., CH-8805 Richterswil (CH)
(74) Vertreter: Rottmann, Maximilian R.

(56) Entgegenhaltungen:
- FR-A- 2 275 539
- US-A- 4 444 818

## Beschreibung

Die vorliegende Erfindung bezieht sich auf einen mehrschichtigen, flächigen Versteifungskörper nach dem Oberbegriff des Patentanspruchs 1.

Gemäss dem Stand der Technik werden zum Versteifen von Blechen, Kunststoff-Formkörpern oder dgl., z.B. von Teilen von Automobilkarosserien besondere Schichtkörper verwendet. Solche Schichtkörper können aus einer ersten, eigentlichen Versteifungsschicht, z.B. einem mit wärmehärtendem Harz gebundenen Glasfasergewebe bestehen, deren eine Oberfläche mit einer zweiten Schicht aus wärmehärtendem, klebrigem Harz versehen ist. Ein derartiger Verbund kann zur Verstärkung von ebenen und gewölbten Blechen verwendet werden, indem ein Stück des Verbundes mit der klebrigen Harzseite auf das Blech aufgelegt und dann thermisch behandelt wird. Dabei erfolgt einerseits eine Verklebung des Schichtkörpers mit dem Blech, und andererseits eine Aushärtung der Harzschichten, so dass zwischen Blech und faserverstärkter Schicht eine schubsteife Verbindung entsteht. Dadurch lässt sich auf einfache Weise, ohne namhaftes zusätzliches Gewicht, eine bedeutende Versteifung der betreffenden Blechpartie erreichen.

Im Interesse einer einfachen Applikation des Versteifungskörpers bildet man die zweite Harzschicht im allgemeinen mit klebriger Oberfläche aus, so dass der einmal angebrachte Versteifungskörper bis zur thermischen Behandlung an der betreffenden Stelle des Bleches haftet. Dies bedingt aber, dass die klebrige Oberfläche des Versteifungskörpers bis zu dessen Verwendung mit einem Schutz versehen werden muss, um sie vor Verschmutzung zu schützen und ein Stapeln der Versteifungskörper zu ermöglichen. Nach dem Stand der Technik wird der Schutz durch ein geeignet behandeltes Papier oder eine Schutzfolie gebildet, die unmittelbar vor der Applikation des Versteifungskörpers abgezogen wird.

Ein Nachteil dabei ist, dass das Abziehen des Schutzpapiers bzw. der Schutzfolie einen unerwünschten, zusätzlichen Arbeitsgang darstellt, der sich zudem kaum maschinell ausführen lässt. Gerade in der Automobilindustrie, in der solche Versteifungskörper verwendet werden und in der das vermehrte Bestreben besteht, so weit wie möglich Arbeitsschritte zu automatisieren, wird dieser Vorgang des Abziehens des Schutzpapiers bzw. der Schutzfolie als unerwünschter, zeitraubender und personalintensiver Vorgang gewertet.

Es ist die Aufgabe der Erfindung, einen Versteifungskörper zum Versteifen von Blechen, Kunststoff-Formkörpern oder dgl. anzugeben, der diese Nachteile nicht mehr aufweist, bei dem also die Entfernung einer Schutzfolie von der dem zu versteifenden Element zugewandten Oberfläche entfällt, so dass vorbereitete, z.B. zugeschnittene Versteifungskörper-Abschnitte bereitgestellt, insbesondere gestapelt werden können, ohne an der Oberfläche zu verschmutzen und aneinander zu haften, um dann in einem leicht automatisierbaren Vorgang zur Versteifung eines Bleches, eines Kunststoff-Formkörpers oder dgl. herangezogen zu werden.

Gemäss der Erfindung wird dies durch die Merkmale im Kennzeichen des Anspruchs 1 bzw. des Anspruchs 5 bzw. des Anspruchs 7 erreicht.

Die US-PS-4 444 818 offenbart ein flächiges Verstärkungsgebilde aus wärmehärtendem Kunstharz, mit einer Struktur aus ein- oder zweischichtigem Kunstharzkörper mit einem eingebauten flachförmigen Schlauch, der bei der Vernetzung seine ursprüngliche Röhrenform wiederbekommt und ein leichtwiegendes Verstärkungsgebilde bildet, wobei eine der Schichten mit Verstärkungsmaterial versehen ist. Als best geeignete Kunststoffe werden Epoxyharze erwähnt (Spalte 4, Zeilen 10-12) und als Verstärkungsmaterialien bereits für den Fachmann bekannte Stoffe (Spalte 5, Zeilen 21-30). Das Gebilde soll eine klebrige Oberfläche aufweisen (Spalte 5, Zeilen 12-20), um das Anbringen des Gebildes auf Metalloberflächen zu ermöglichen. Damit ist es aber nicht möglich, die erfindungsgemäss gestellte Aufgabe zu lösen.

Aus der FR-A-2 275 539 ist zwar ein trägerloser Klebefilm bekannt geworden, der bei Raumtemperatur nicht klebrig, bei erhöhter Temperatur jedoch klebrig ist. Dieser Klebefilm eignet sich in keiner Weise als Verstärkungselement für Bleche oder dgl. und wird nur einer einzigen Wärmebehandlung unterworfen, d.h. er muss im nicht-klebrigen Zustand auf den zu verklebenden Gegenstand aufgebracht und dort unter Druck festgehalten werden, bis die Wärmebehandlung abgeschlossen ist.

Demgegenüber lässt sich das Aufbringen eines erfindungsgemässen Versteifungskörpers sehr leicht automatisieren bzw. durch einen Roboter oder dgl. ausführen, indem der Versteifungskörper zunächst einer ersten, z.B. einseitigen, oberflächlichen Wärmebehandlung unterworfen werden kann, dann anschliessend auf das zu versteifende Blech, den Formkörper etc. aufgesetzt und schliesslich einer zweiten Wärmebehandlung unterworfen wird; das diffizile Abziehen des Schutzpapiers bzw. der Schutzfolie wie auch ein Festhalten bis zur Aushärtung entfällt.

Für die praktische Ausbildung eines solchen Versteifungskörpers bestehen verschiedene Möglichkeiten; einige davon sind in den abhängigen Ansprüchen 2-4, 6 und 8-19 umschrieben und werden im folgenden noch näher erläutert werden.

In den Zeichnungen zeigen:
- Fig. 1: eine schematische, perspektivische Ansicht eines ersten Ausführungsbeispiels eines Versteifungskörpers vor einer ersten Wärmebehandlung;
- Fig. 2: eine schematische, perspektivische Ansicht des ersten Ausführungsbeispiels des Versteifungskörpers nach der ersten Wärmebehandlung;
- Fig. 3: einen Teilschnitt in grösserem Maßstab nach der Linie III-III in Fig. 2;
- Fig. 4: eine schematische, perspektivische Ansicht eines zweiten Ausführungsbeispiels eines Versteifungskörpers vor einer ersten Wärmebehandlung;
- Fig. 5: einen Teilschnitt in grösserem Maßstab nach der Linie V-V in Fig. 4;
- Fig. 6: eine schematische, perspektivische Ansicht des zweiten Ausführungsbeispiels des Versteifungskörpers nach der ersten Wärmebehandlung;
- Fig. 7: einen Teilschnitt in grösserem Maßstab nach der Linie VII-VII in Fig. 6;
- Fig. 8: eine teilweise geschnittene Teilansicht eines dritten Ausführungsbeispiels eines Versteifungskörpers;
- Fig. 9: eine teilweise geschnittene Teilansicht eines vierten Ausführungsbeispiels eines Versteifungskörpers;
- Fig. 10: einen Schnitt durch ein fünftes Ausführungsbeispiel eines Versteifungskörpers, vor dem Anbringen an ein zu versteifendes Blech;
- Fig. 11: einen Schnitt durch das fünfte Ausführungsbeispiel des Versteifungskörpers, nachdem er an dem zu versteifenden Blech angebracht und einer zweiten Wärmebehandlung unterzogen worden ist;
- Fig. 12: einen Schnitt durch ein sechstes Ausführungsbeispiel eines Versteifungskörpers, vor dem Anbringen an ein zu versteifendes Blech; und
- Fig. 13: einen Schnitt durch das sechste Ausführungsbeispiel des Versteifungskörpers, nachdem er an dem zu versteifenden Blech angebracht und einer zweiten Wärmebehandlung unterzogen worden ist.

Wie schon einleitend gesagt besteht der Leitgedanke der Erfindung darin, ein Blech, einen Kunststoff-Formkörper oder dergleichen mit Hilfe eines flächigen Versteifungskörpers zu versteifen, ohne dass ein Schutzpapier, eine Schutzfolie oder dergleichen entfernt werden muss, bevor der Versteifungskörper am zu versteifenden Element angebracht werden kann.

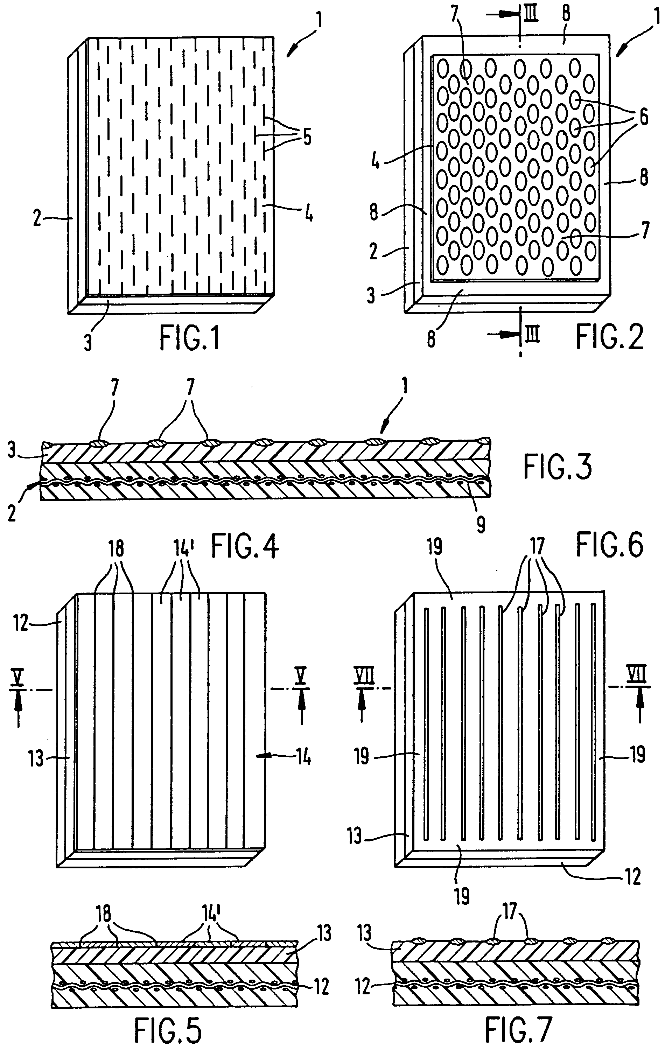

Zu diesem Zwecke kann ein Versteifungskörper verwendet werden, wie er in verschiedenen Ausführungen beispielsweise in den Fig. 1 bis 13 schematisch dargestellt ist. Wesentlich ist jedenfalls, dass der Versteifungskörper zumindest eine Schicht aus einem unter Wärmeeinfluss aushärtenden Kunstharz besitzt und dass er zur Erzeugung einer klebrigen Oberfläche mindestens eine durch Wärme aktivierbare Schicht aufweist. Die wärmehärtende Kunstharzschicht ist erforderlich, damit der Versteifungskörper unter Wärmeeinfluss starr wird und somit überhaupt seine Versteifungsfunktion ausüben kann.

Das in den Fig. 1-3 dargestellte, erste Ausführungsbeispiel eines generell mit 1 bezeichneten Versteifungskörpers besitzt eine Trägerschicht 2, z.B. aus einem wärmehärtenden Kunstharz, in die eine Glasfasermatte 9 eingebettet ist und die einseitig mit einer Schicht 3 aus wärmehärtendem Harz versehen ist. Da die Oberfläche der Harzschicht 3 zweckmässigerweise klebrig ausgebildet ist, um den Versteifungskörper an einem zu versteifenden Blech anbringen zu können, ohne zusätzliche Befestigungsmassnahmen zu treffen, ist eine Abdeckfolie 4 vorgesehen, die die Harzoberfläche vor Verschmutzung schützt und es erlaubt, dass vorbereitete, zugeschnittene Versteifungskörper 1 mitsamt der darauf angebrachten, klebrigen Harzschicht 3 aufeinander gestapelt werden können, ohne aneinander kleben zu bleiben.

Je nach Anforderungen kann die Harzschicht 3 als ganzes selbstklebend ausgebildet sein, oder aber nur auf ihrer gegen aussen gerichteten Oberfläche eine Haftklebeschicht aufweisen.

Um nun das Abziehen der Schutzfolie 4 vor dem Anbringen des Versteifungskörpers 1 zu vermeiden, ist die Folie aus einem Material hergestellt, das bei Wärmeeinwirkung schrumpft. Solche Materialien sind an sich bekannt und werden in zahlreichen unterschiedlichen Ausführungen auf dem Markt angeboten.

Gemäss dem ersten Ausführungsbeispiel nach Fig. 1 ist die Folie 4 einstückig ausgebildet und besitzt eine Vielzahl von Schlitzen 5, die in parallel zueinander verlaufenden Reihen und von Reihe zu Reihe gegeneinander versetzt angeordnet sind. In diesem Zustand haben die Schlitze 5 keinen Einfluss, da sie geschlossen sind, so dass mit der geschlitzten Folie 4 der gleiche Schutzeffekt erzielt ist wie mit einer durchgehenden Folie ohne Schlitze.

Soll nun der Versteifungskörper 1 an einem zu verstärkenden Blech befestigt werden, braucht er nur kurz einer oberflächlichen Wärmebehandlung unterzogen zu werden, z.B. dadurch, dass er folienseitig beflammt oder an einem IR-Strahler vorbeigeführt wird; dabei schrumpft die Folie 4 und nimmt eine netzartige Konfiguration ein, wobei sich die Schlitze 5 zu ovalen Öffnungen 6 vergrössern (Fig. 2). Dadurch wird ein erheblicher Teil der klebrigen Oberfläche der Harzschicht 3 freigesetzt, so dass der Versteifungskörper wie üblich an der zu verstärkenden Stelle durch einfaches Auflegen bzw. leichtes Andrücken befestigt werden kann.

Ausserdem schrumpft die Folie 4 als Ganzes, so dass entlang des Randes der Harzschicht 3 Randbereiche 8 vollständig freigelegt werden. Dies ist ein höchst erwünschter, zusätzlicher Effekt, da dadurch die Haftung des Versteifungskörpers 1, vor der abschliessenden Wärmebehandlung, am zu verstärkenden Bauteil im Randbereich ausgeprägter ist. Damit wird ein verbesserter Korrosionsschutz im Randbereich 8 erreicht, indem durch das vollflächige Verkleben des Randbereiches 8 am zu verstärkenden Bauteil keine Unterspülungen mit eventueller, partieller Ablösung des Versteifungskörpers 1 vorkommen können. Derartige Unterspülungen können eventuell dann auftreten, wenn der Versteifungskörper 1 z.B. an die Innenseite eines Autokarosserie-Bauteils angebracht wird, das dann anschliessend einer Wasch- und/oder Grundierbehandlung unterzogen wird, bevor die abschliessende Wärmebehandlung erfolgt.

Bei der abschliessenden Wärmebehandlung wird das wärmehärtende Harz in der Schicht 3 zunächst flüssiger und umfliesst die verbliebenen Stege 7 der geschrumpften Schutzfolie 4 (Fig. 3), so dass nahezu die gesamte Oberfläche der klebrigen Harzschicht 3 zur Verbindung des Versteifungskörpers 1 mit einem zu verstärkenden Blech oder dgl. beiträgt.

Der Versteifungskörper des zweiten Ausführungsbeispiels gemäss Fig. 4-7 ist ähnlich aufgebaut, mit einem harzgebundenen Glasfasergewebe 12, auf das eine Schicht 13 aus klebrigem, wärmehärtendem Harz aufgebracht ist. Die Schutzfolie 14 aber, wiederum aus einem Material gefertigt, das bei Wärmeeinwirkung schrumpft, ist aus einzelnen Bahnen 14' zusammengesetzt, die aneinanderstossend verlegt sind und so die Wirkung einer durchgehenden Folie aufweisen (Fig. 4 und 5), da die einzelnen Bahnen durch Schlitze 18 mit minimaler Breite voneinander getrennt sind. Nach der Wärmevorbehandlung schrumpfen die Bahnen 14' zu schmalen Stegen 17, so dass wiederum nahezu die gesamte Oberfläche der klebrigen Harzschicht 13 freigegeben ist, um den Versteifungskörper durch einfaches Andrücken an einem zu verstärkenden Blech zu befestigen (Fig. 6 und 7). Auch hier stellt sich wiederum der Effekt einer gesamthaften Schrumpfung auch in Längsrichtung der verbleibenden Stege 17 ein, so dass Randbereiche 19 der klebrigen Oberfläche der Harzschicht 13 vollständig freigegeben sind, mit den resultierenden Vorteilen, die im Zusammenhang mit dem ersten Ausführungsbeispiel erläutert wurden.

Bei den beiden vorstehend erläuterten Ausführungsbeispielen ist die erfindungsgemäss vorgesehene, durch Wärme aktivierbare Schicht durch die Kombination der Harzschicht 3 bzw. 13 und der Schrumpffolie 4 bzw. 14 gebildet; die Harzschicht 3 bzw. 13 ist an sich schon klebrig, wobei die Aktivierung, d.h. die Freilegung der klebrigen Oberfläche, durch das Schrumpfen der Abdeckfolie 4 bzw. 14 erfolgt.

Wie bereits kurz erwähnt, ist die Schicht 2 bzw. 12 des ersten und zweiten Ausführungsbeispiels mit Verstärkungsmitteln versehen. Dazu können folgende Massnahmen einzeln oder in Kombination verwendet werden:
1. Dem Harzmaterial werden anorganische Füllstoffe wie z.B. Talcum, Kreide, Mica, Wollastonit oder dergleichen zugemischt, um die mechanischen Eigenschaften des ausgehärteten Harzes zu verbessern.
2. In die Harzschicht 2 bzw. 12 kann, wie in den Fig. 3 und 5 dargestellt, eine Matte, ein Gewebe, ein Geflecht, ein Vlies oder dergleichen als flächiger Verstärkungskörper 9 eingebettet werden. Dieser flächige Verstärkungskörper 9 besteht vorzugsweise aus Glasfasern, Carbonfasern, Aramidfasern oder dergleichen. Auch diese Massnahme trägt wesentlich zur Verbesserung der physikalischen Eigenschaften der Harzschicht in ausgehärtetem Zustand bei.

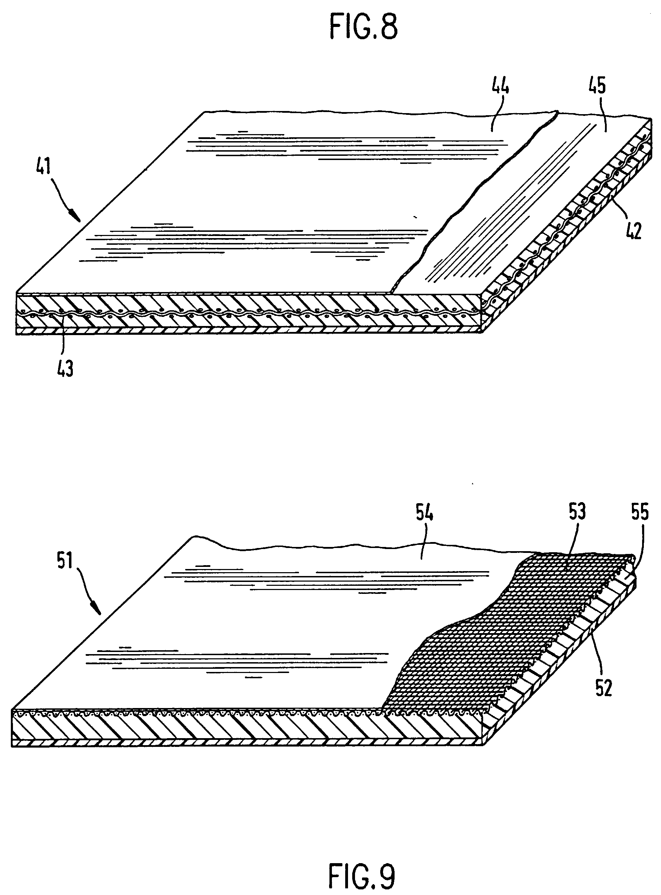

In den Fig. 8 und 9 sind weitere Ausführungsbeispiele eines Versteifungskörpers 41 bzw. 51 veranschaulicht. Die Versteifungskörper 41 bzw. 51 sind zweischichtig ausgebildet: Einerseits ist eine Schicht gebildet aus einem mit Verstärkungsmitteln versehenen wärmehärtenden Harz 45 und andererseits eine Schicht eines reaktiven Schmelzklebers 42 vorgesehen, wie dies in Fig. 8 dargestellt ist. Entsprechende Schichten 55 aus einem mit Verstärkungsmitteln versehenen wärmehärtenden Harz und eine Schicht 52 eines reaktiven Schmelzklebers sind beim Ausführungsbeispiel gemäss Fig. 9 vorhanden. Das für die Schicht 45 verwendete Material ist eine hitzehärtende Einkomponenten-Epoxidharz-Mischung, welche gegebenenfalls bereits vorpolymerisiert sein kann. Die Schicht 42 bzw. 52 kann durch einen Schmelzkleber gebildet sein; als reaktiver Schmelzkleber kommt ein Klebeharz auf Epoxidbasis, evtl. auf Polyurethan- oder Copolyesterbasis in Frage. Als Beispiel kann eine Einkomponentenformulierung mit Epoxidharzen auf der Grundlage von Bisphenol-A und mit einem Hitzehärter, z.B. Dicyandiamid, genannt werden. Solche Schmelzkleber sind bei Raumtemperatur trocken und werden bei einer Temperatur ab ca. 60° C klebrig. Der Schmelzbereich kann durch geeignete Wahl der Festharze und durch Zugabe von flüssigen Additiven wie z.B. flüssige Epoxide, Tackifier-Harze, Weichmachern etc. eingestellt werden.

Bei diesem Ausführungsbeispiel wird die Schmelzkleberschicht 42 bzw. 52 im Zuge der ersten Wärmebehandlung auf ca. 60 bis 140° C, vorzugsweise auf ca. 80 bis 120° C erwärmt. Dies gewährleistet, dass die Oberfläche des Versteifungskörpers 41 bzw. 51 genügend klebrig wird und einen genügenden Wärmeinhalt aufweist, um zuverlässig an einem Blech haften zu bleiben, selbst wenn dieses nur Raumtemperatur besitzt. Auch wenn sich der Versteifungskörper 41 bzw. 51 wieder auf Raumtemperatur abkühlt, bleibt er haften.

Bei der zweiten Wärmebehandlung erfolgt eine Erwärmung des Versteifungskörpers 41 bzw. 51 auf ca. 140 bis 240° C, vorzugsweise ca. auf 160 bis 200° C. Dies bewirkt ein Vernetzen des Harzmaterials und damit ein Aushärten der Schmelzkleber-Harzschicht 42 bzw. 52.

Der Vorteil der Ausführung gemäss Fig. 8 und 9 besteht darin, dass sie billig sind, da wenig des relativ teuren, reaktiven Schmelzkleber-Materials verwendet werden muss. Auch kann grundsätzlich eine gute Versteifung erreicht werden, da für die eigentliche Versteifungsschicht mit den Verstärkungsmitteln ein optimal geeignetes Material verwendet werden kann, namentlich ein Harz mit einem vergleichsweise hohen Füllstoffgehalt, während für die eigentliche Klebeschicht ein Material mit vergleichsweise geringem Füllstoffgehalt Anwendung findet, um die Elastizität der Klebeschicht nicht zu beeinträchtigen.

Bezüglich der Verstärkungsmittel gilt sinngemäss wiederum dasselbe, was vorstehend unter Punkt 1. und 2. erläutert wurde. Im Ausführungsbeispiel gemäss Fig. 8 ist ein flächiger Verstärkungskörper 43 in der Harzschicht 45 eingebettet, während im Ausführungsbeispiel gemäss Fig. 9 ein flächiger Verstärkungskörper 53 auf die der reaktiven Schmelzkleberschicht abgewandte Oberfläche der Harzschicht 55 aufgelegt, gegebenenfalls oberflächlich eingepresst ist. Namentlich kann auf die Harzschicht 55, wie in Fig. 9 dargestellt, eine Matte, ein Gewebe, ein Geflecht, ein Vlies oder dergleichen als flächiger Verstärkungskörper 53 aufgelegt, gegebenenfalls an- bzw. oberflächlich eingepresst werden. Dieser flächige Verstärkungskörper 53 besteht vorzugsweise aus Glasfasern, Carbonfasern, Aramidfasern, Jute, Ramie oder dergleichen. Auch diese Massnahme trägt wesentlich zur Verbesserung der physikalischen Eigenschaften der Schicht 55 in ausgehärtetem Zustand bei.

Die Schicht 45 kann auch durch Imprägnieren des Verstärkungskörpers 43 mit einem niederviskosen, hitzehärtenden Epoxidharz ausgebildet werden. Der Verstärkungskörper 43, z.B. in Form eines Glasfasergewebes, wird dabei in einer in Lösung befindlichen Harzmischung mit einem Anteil von 30% bis 70% Füllstoffen eingetaucht, ausgepresst und getrocknet; nach den Trocknungsvorgang kann gegebenenfalls eine Vorpolymerisierung erfolgen.

Die freie Oberfläche des Versteifungskörpers 41 bzw. 51 kann mit einer Abdeckfolie 44 bzw. 54 aus Aluminium, Papier oder Polyester versehen sein.

Eine andere Möglichkeit, die Ausführungsbeispiele gemäss Fig. 8 und 9 auszubilden, besteht darin, als Schicht 42 bzw. 52 einen thermoplastischen Schmelzkleber auf der Basis von modifiziertem Polypropylen, Copolyamid oder Copolyester zu verwenden. Als Beispiel kann genannt werden: Polypropylenpolymer, gepfropft mit polaren Gruppen wie Maleinsäureanhydrid, Akrylsäuren, Acrylsäureestern oder dergleichen. Diese Materialien besitzen einen Schmelzbereich von ca. 130 bis 150° C, eine Wärmestandfestigkeit von ca. 130 bis 190° C, je nach Belastung, und eine Applikationstemperatur von ca. 170 bis 250° C.

In diesem Fall erfolgt die Erwärmung im Zuge der ersten Wärmebehandlung auf die Applikationstemperatur von ca. 170 bis 250° C, jedoch nur sehr kurzzeitig. Durch die kurze Wärmebehandlung reagiert die Harzschicht 45 bzw. 55 noch nicht. Der Vorteil einer hohen Applikationstemperatur ist, dass der Versteifungskörper 41 bzw. 51 besser auf Blechen haftet, deren Oberfläche noch Spuren von Öl aufweist, da die Ölresten infolge der hohen Temperatur in die Schmelzkleberschicht 42 bzw. 52 eindiffundieren. Die Schicht 42 des thermoplastischen Schmelzklebers kann auch durch ein Polyamid- oder Polyester-Copolymer gebildet sein, die ähnliche Eigenschaften besitzen wie die zuvor genannten Polypropylenpolymeren.

In allen Fällen ist die thermoplastische Schmelzkleberschicht 42 vorzugsweise eine Folie mit einer Dicke von 0,1 bis 2mm, vorzugsweise 0,2 bis 0,6mm, mit der die Schicht 45 bzw. 55 aus wärmehärtendem Harz verbunden ist.

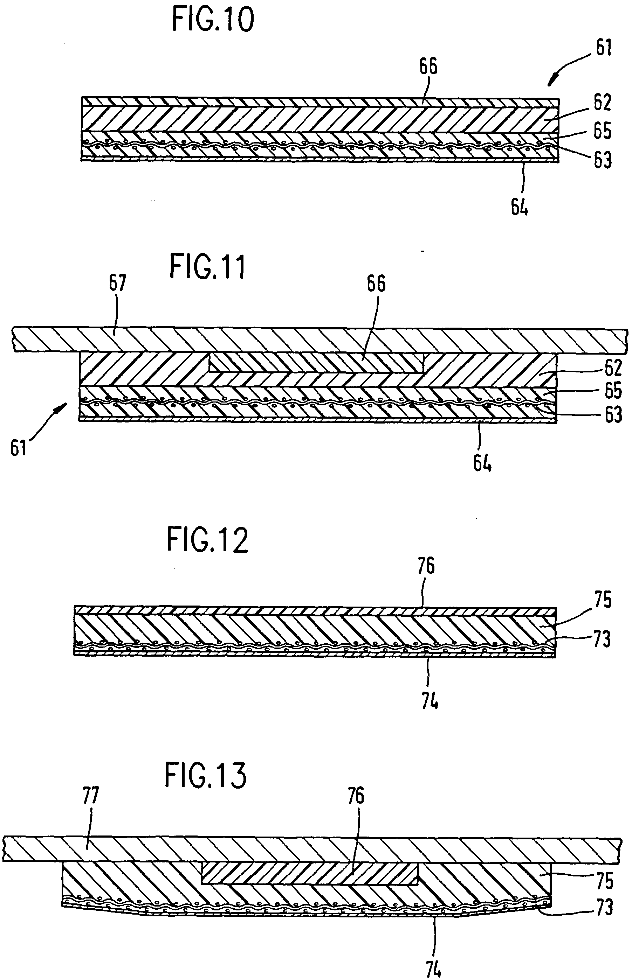

In den Fig. 10 und 11 ist ein weiteres Ausführungsbeispiel in einem schematischen Schnitt dargestellt. Der generell mit 61 bezeichnete Versteifungskörper ist wiederum mehrschichtig ausgebildet und umfasst eine Schicht 65 aus wärmehärtendem Epoxidharz; vorzugsweise werden die gleichen Harze verwendet wie vorstehend in Zusammenhang mit den Ausführungsbeispielen gemäss Fig. 8 und 9 beschrieben. Dasselbe gilt für den Verstärkungskörper 63 bzw. die Füllstoffe, wobei die freie Oberfläche der Harzschicht 65 gegebenenfalls wiederum mit einer Schutzfolie 64 abgedeckt sein kann. Die andere Oberfläche der Harzschicht 65 ist mit einer Klebeschicht 62 bedeckt, vorzugsweise einer reaktiven Schmelzkleberschicht, wie sie vorstehend beschrieben worden ist.

Der Schmelzpunkt dieser Schicht 62 ist jedoch durch geeignete Zusammensetzung des Klebermaterials wesentlich tiefer, insbesondere im Bereich von ca. 10 bis 40° C liegend, so dass die Schicht 62 bei Raumtemperatur oder leicht erhöhter Temperatur bereits klebrig ist.

Die Schicht 62 ist schliesslich mit einer schrumpfenden, thermoplastischen Schmelzkleberfolie 66 bedeckt, die bei Raumtemperatur trocken, d.h. nicht klebrig ist. Als Material für die Folie 66 kommen ein modifiziertes Polyäthylen, ein modifiziertes Polypropylen, ein Copolyamid, ein Copolyester, ein Äthylenvinylacetat oder dergleichen infrage. Vorzugsweise wird ein Polyäthylen, gepfropft mit Arylsäure oder Acrylsäureestern oder ein mit Acrylsäuren oder Acrylsäureestern copolymerisiertes Polyäthylen verwendet.

Wie aus Fig. 11 zu sehen ist, schrumpft die Folie 66 nach der ersten Wärmebehandlung und gibt einen namhaften Teil der Schicht 62 frei. Beim Aufpressen des Versteifungskörpers 61 auf ein zu versteifendes Blech 67 wird die geschrumpfte Folie 66 in die Schicht 62 eingebettet.

Eine Variante ist in den Fig. 12 und 13 dargestellt. Allerdings ist hier die Schmelzkleberschicht 62 weggelassen und die Schrumpffolie 76 liegt direkt auf der Oberfläche der Harzschicht 75 auf. Zu diesem Zweck ist die Zusammensetzung des Harzes dahingehend geändert, dass dessen Schmelzpunkt vergleichsweise niedrig liegt, um zu erreichen, dass die Harzoberfläche bereits in einem Temperaturbereich von ca. 10 bis 40° C klebrig ist.

Vorzugsweise ist der Verstärkungskörper 73 auf die der Folie 76 abgewandte Oberfläche der Schicht 75 aufgelegt oder aufgepresst und mit einer Schutzfolie 74 versehen.

In Fig. 13 ist der Versteifungskörper 71 auf das zu versteifende Blech 77 aufgelegt. Die erste Wärmebehandlung ist bereits erfolgt, so dass die Folie 76 geschrumpft ist und einen namhaften Teil der klebrigen Harzschicht 75 freigibt. Ähnlich wie im Ausführungsbeispiel gemäss Fig. 10 und 11 wird dabei die geschrumpfte Folie 76 in die Harzschicht 75 eingebettet.

Entsprechend dem Ausführungsbeispiel gemäss Fig. 1 bis 3 kann die Folie 66 bzw. 76 ebenfalls mit Schlitzen versehen sein. Der weitergehende Vorteil ist aber, dass auch durch die Folie 66 bzw. 76 selber eine Klebewirkung erzielt wird, da diese, wie erwähnt, aus einem thermoplastischen Schmelzklebermaterial besteht. Es ist daher nicht erforderlich, dass die verbleibenden Stege der geschrumpften, geschlitzten Folie vollständig im Material der Schicht 62 bzw. der Harzschicht 76 eingebettet werden.

In allen Fällen, die zuvor beschrieben worden sind, ist gewährleistet, dass die Oberfläche des Versteifungskörpers, die auf dem zu versteifenden Blech haften soll, vor der ersten Wärmebehandlung trocken, insbesondere nicht klebrig ist. Dieser Zustand ändert sich nach der ersten Wärmebehandlung; diese kann z.B. mittels eines Infrarotstrahlers durchgeführt werden, an welchem der Versteifungskörper vorbeibewegt wird. Eine andere Möglichkeit besteht darin, die besagte, mit dem Blech in Kontakt gelangende Oberfläche zu beflammen.

Je nach gewähltem Material für diejenige Schicht, die mit dem zu versteifenden Blech in Kontakt gelangt, kann die erste Wärmebehandlung bei einer niedrigeren Temperatur durchgeführt werden als die zweite Wärmebehandlung, insbesondere um zu verhindern, dass die eigentliche Versteifungsschicht bereits auszuhärten beginnt. Im Fall des Ausführungsbeispieles hingegen, bei welchem als Kontaktschicht ein thermoplastischer Schmelzkleber verwendet wird, empfiehlt es sich, die erste Wärmebehandlung bei der gleichen bzw. einer gegenüber der zweiten Wärmebehandlung noch höheren Temperatur durchzuführen. Allerdings muss dann darauf geachtet werden, dass die erste Wärmebehandlung nur sehr kurzzeitig erfolgt.

Die zweite Wärmebehandlung dauert im allgemeinen wesentlich länger als die erste Wärmebehandlung. Als Anhaltspunkt kann folgendes Beispiel genannt werden: Aus Gründen der Einfachheit empfiehlt es sich, z.B. im Fall eines frisch lackierten Körpers, der abschnittweise mit einem Versteifungskörper versteift werden muss, die zweite Wärmebehandlung in einem Ofen, insbesondere in einem Lackeinbrennofen durchzuführen. Dieser arbeitet bei einer Temperatur von ca. 170 bis 190° C und die Einbrennzeit beträgt ca. 30 Minuten. Ein wärmehärtendes Epoxidharz kann so eingestellt werden, dass eine Wärmebehandlung bei 180° C während ca. 30 min. zur vollständigen Aushärtung des Harzes ausreicht. Somit fällt ein separat auszuführender Arbeitsgang für die zweite Wärmebehandlung weg.

## Patentansprüche

1. Mehrschichtiger, flächiger Versteifungskörper, bei dem zumindest eine Schicht aus einem unter Wärmeeinfluss aushärtenden Kunstharz besteht, wobei derselbe zur Erzeugung einer klebrigen Oberfläche mindestens eine durch Wärme aktivierbare Schicht aufweist, dadurch gekennzeichnet, dass er durch eine erste Schicht (2; 12) eines mit Verstärkungsmitteln (9; 12) versehenen, wärmehärtenden Harzes und eine zweite Schicht (3; 13) aus einem wärmehärtenden, klebrigen Harz gebildet ist, wobei die zweite Schicht (3; 13) mit einer bei Wärmeeinwirkung schrumpfenden Folie (4; 14) bedeckt ist, die die zweite Schicht (3; 13) bei der Schrumpfung weitgehend freilegt.

2. Versteifungskörper nach Anspruch 1, dadurch gekennzeichnet, dass die Folie (4) einstückig ausgebildet und mit einer Mehrzahl von Schlitzen (5) versehen ist.

3. Versteifungskörper nach Anspruch 2, dadurch gekennzeichnet, dass die Schlitze (5) in parallel zueinander verlaufenden Reihen und von Reihe zu Reihe gegeneinander versetzt angeordnet sind.

4. Versteifungskörper nach Anspruch 1, dadurch gekennzeichnet, dass die Folie (14) aus einer Mehrzahl von nebeneinander liegenden, parallelen Bahnen (14') besteht.

5. Mehrschichtiger, flächiger Versteifungskörper, bei dem zumindest eine Schicht aus einem unter Wärmeeinfluss aushärtenden Kunstharz besteht, wobei derselbe zur Erzeugung einer klebrigen Oberfläche mindestens eine durch Wärme aktivierbare Schicht aufweist, dadurch gekennzeichnet, dass er durch eine erste Schicht (45; 55) eines mit Verstärkungsmitteln (43; 53) versehenen, wärmehärtenden Harzes und eine zweite Schicht (42; 52) eines reaktiven Schmelzklebers gebildet ist.

6. Versteifungskörper nach Anspruch 5, dadurch gekennzeichnet, dass der reaktive Schmelzkleber ein Klebeharz auf Epoxid-, Polyurethan- oder Copolyesterbasis ist.

7. Mehrschichtiger, flächiger Versteifungskörper, bei dem zumindest eine Schicht aus einem unter Wärmeeinfluss aushärtenden Kunstharz besteht, wobei derselbe zur Erzeugung einer klebrigen Oberfläche mindestens eine durch Wärme aktivierbare Schicht aufweist, dadurch gekennzeichnet, dass er durch eine erste Schicht (45; 55) eines mit Verstärkungsmitteln (43; 53) versehenen, wärmehärtenden Harzes und eine zweite Schicht (42; 52) eines thermoplastischen Schmelzklebers gebildet ist.

8. Versteifungskörper nach einem der Ansprüche 1, 5, 6 oder 7, dadurch gekennzeichnet, dass die erste Schicht (2; 12; 45) durch einen mit einem wärmehärtenden Harz getränkten bzw. imprägnierten, flächigen Verstärkungskörper (9; 43) gebildet ist.

9. Versteifungskörper nach einem der Ansprüche 1-8, dadurch gekennzeichnet, dass das wärmehärtende Harz eine gegebenenfalls teilweise vorpolymerisierte Einkomponenten-Epoxidharz-Mischung ist.

10. Versteifungskörper nach Anspruch 7, dadurch gekennzeichnet, dass der thermoplastische Schmelzkleber ein modifiziertes Polypropylen, ein modifiziertes Polyäthylen, ein Copolyamid oder ein Copolyester ist.

11. Versteifungskörper nach Anspruch 7 oder 10, dadurch gekennzeichnet, dass die Schicht (42; 52) des thermoplastischen Schmelzklebers eine mit der Harzschicht (45; 55) verbundene Folie ist.

12. Versteifungskörper nach Anspruch 11, dadurch gekennzeichnet, dass die Folie aus einem unter Wärmeeinwirkung schrumpfenden Material besteht, welche gegebenenfalls mit einer Mehrzahl von Schlitzen versehen ist.

13. Versteifungskörper nach einem oder mehreren der Ansprüche 1-12, dadurch gekennzeichnet, dass die Verstärkungsmittel Füllstoffe und/oder Matten, Gewebe, Geflechte, Vliese oder dgl. umfassen.

14. Versteifungskörper nach Anspruch 13, dadurch gekennzeichnet, dass die Füllstoffe, einzeln oder in Kombination, ausgewählt sind aus der Gruppe umfassend Talkum, Kreide, Mica, Wollastonit, Glasfasern, Carbonfasern, Aramidfasern, Jutefasern und Ramiefasern.

15. Versteifungskörper nach Anspruch 8 oder 13, dadurch gekennzeichnet, dass der flächige Verstärkungskörper (9; 12; 43; 53; 63; 73) bzw. die Matten, Gewebe, Geflechte, Vliese oder dgl. aus Glas, Aramid, Carbon, Jute oder Ramie bestehen.

16. Versteifungskörper nach Anspruch 13, dadurch gekennzeichnet, dass die Verstärkungsmittel (53; 73) auf die dem zu versteifenden Element (67; 77) abgewandte Schicht (55; 75) bzw. abgewandte Oberfläche der Schicht (75) des Versteifungskörpers aufgelegte und gegebenenfalls angepresste Matten, Gewebe, Geflechte, Vliese oder dgl. aus Glas, Aramid, Carbon, Jute oder Ramie umfassen.

17. Versteifungskörper nach Anspruch 13, dadurch gekennzeichnet, dass die Verstärkungsmittel (9; 43; 63) in die dem zu versteifenden Element abgewandte Schicht (2; 12; 45; 65) des Versteifungskörpers eingebettete Matten, Gewebe, Geflechte, Vliese oder dgl. aus Glas, Aramid, Carbon, Jute oder Ramie umfassen.

18. Versteifungskörper nach einem oder mehreren der Ansprüche 1-17, dadurch gekennzeichnet, dass die Oberfläche des Versteifungskörpers, die dem zu versteifenden Element abgewandt ist, mit einer Schutzfolie (44; 54; 64; 74) bedeckt ist.

19. Versteifungskörper nach Anspruch 18, dadurch gekennzeichnet, dass die Schutzfolie (44; 54; 64; 74) aus Aluminium, Papier oder Polyester besteht.

## Claims

1. Multi-layer flat strengthening member, in which at least one layer consists of a synthetic resin hardening under the influence of heat, said member for the production of an adhesive surface, comprising at least one layer which can be activated by heat, characterised in that it is formed by a first layer (2; 12) of a thermosetting resin provided with strengthening means (9; 12) and a second layer (3; 13) of a thermosetting, adhesive resin, the second layer (3; 13) being covered by a film (4; 14) which shrinks under the action of heat, which largely exposes the second layer (3; 13) at the time of shrinkage.

2. Strengthening member according to Claim 1, characterised in that the film (4) is constructed in one piece and is provided with a plurality of slots (5).

3. Strengthening member according to Claim 2, characterised in that the slots (5) are arranged in parallel rows and are staggered with respect to each other from row to row.

4. Strengthening member according to Claim 1, characterised in that the film (14) consists of a plurality of parallel webs (14') lying one beside the other.

5. Multi-layer flat strengthening member in which at least one layer consists of a synthetic resin hardening under the influence of heat, said member, for the production of an adhesive surface, comprising at least one layer which can be activated by heat, characterised in that it is formed by a first layer (45; 55) of a thermosetting resin provided with strengthening means (43; 53) and a second layer (42; 52) ofa reactive hot-melt adhesive.

6. Strengthening member according to Claim 5, characterised in that the reactive hot-melt adhesive is an adhesive resin based on epoxide, polyurethane or copolyester.

7. Multi-layer flat strengthening member, in which at least one layer consists of a synthetic resin hardening under the influence of heat, said member, for the production of an adhesive surface, comprising at least one layer which can be activated by heat, characterised in that it is formed by a first layer (45; 55) of a thermosetting resin provided with strengthening means (43; 53) and a second layer (42; 52) of a thermoplastic hot-melt adhesive.

8. Strengthening member according to one of Claims 1, 5, 6 or 7, characterised in that the first layer (2; 12; 45) is formed by a flat strengthening member (9; 43) immersed in or impregnated with a thermosetting resin.

9. Strengthening member according to one of Claims 1 to 8, characterised in that the thermosetting resin is a possibly partly pre-polymerised single component epoxy resin mixture.

10. Strengthening member according to Claim 7, characterised in that the thermoplastic hot-melt adhesive is a modified polypropylene, a modified polyethylene, a copolyamide or a copolyester.

11. Strengthening member according to Claim 7 or 10, characterised in that the layer (42; 52) of thermoplastic hot-melt adhesive is a film connected to the resin layer (45; 55).

12. Strengthening member according to Claim 11, characterised in that the film consists of a material which shrinks under the action of heat, which is possibly provided with a plurality of slits.

13. Strengthening member according to one or more of Claims 1 to 12, characterised in that the strengthening means comprise fillers and/or mats, fabrics, nets, fleeces or the like.

14. Strengthening member according to Claim 13, characterised in that the fillers, individually or in combination, are chosen from the group comprising talcum, chalk, mica, wollastonite, glass fibres, carbon fibres, aramid fibres, jute fibres and ramie fibres.

15. Strengthening member according to Claim 8 or 13, characterised in that the flat strengthening member (9; 12; 43; 53; 63; 73) or the mats, fabrics, nets, fleeces or the like consist of glass, aramid, carbon, jute or ramie.

16. Strengthening member according to Claim 13, characterised in that the strengthening means (53; 73) comprise mats, fabrics, nets, fleeces or the like of glass, aramid, carbon, jute or ramie laid on and possibly pressed onto the layer (55; 75) or the surface of the layer (75) of the strengthening member remote from the member (67; 77) to be strengthened.

17. Strengthening member according to Claim 13, characterised in that the strengthening means (9; 43; 63) comprise mats, fabrics, nets, fleeces or the like of glass, aramid, carbon, jute or ramie embedded in the strengthening layer (2; 12; 45; 65) of the strengthening member remote from the member to be strengthened.

18. Strengthening member according to one or more of Claims 1 to 17, characterised in that the surface of the strengthening member, which is remote from the member to be strengthened, is covered with a protective film (44; 54; 64; 74).

19. Strengthening member according to Claim 18, characterised in that the protective film (44; 54; 64; 74) consists of aluminium, paper or polyester.

## Revendications

1. Corps de renforcement plat, à plusieurs couches, dans lequel au moins une couche est constituée d'une résine artificielle durcissant sous l'influence de la chaleur, dans lequel celui-ci présente au moins une couche pouvant être activée par la chaleur, afin de réaliser une surface collante, caractérisé en ce qu'il est constitué d'une première couche (2 ; 12), en une résine durcissant sous l'effet de la chaleur et pourvue de moyens de renforcement (9 ; 12) et d'une deuxième couche (3 ; 13), constituée d'une résine collante durcissant sous l'effet de la chaleur, la deuxième couche (3 ; 13) étant recouverte d'une feuille thermorétractable (4 ; 14) qui se détache dans une large mesure de la deuxième couche (3 ; 13) au cours de son retrait.

2. Corps de renforcement selon la revendication 1, caractérisé en ce que la feuille (4) est réalisée d'une pièce et est pourvue de plusieurs fentes (5).

3. Corps de renforcement selon la revendication 1, caractérisé en ce que les fentes (5) sont disposées en séries placées parallèlement les unes par rapport aux autres et décalées d'une série à l'autre l'une par rapport à l'autre.

4. Corps de renforcement selon la revendication 1, caractérisé en ce que la feuille (14) est constituée de plusieurs bandes (14') parallèles et disposées les unes à côté des autres.

5. Corps de renforcement plat, à plusieurs couches, dans lequel au moins une couche est constituée d'une résine artificielle durcissant sous l'influence de la chaleur, dans lequel celui-ci présente au moins une couche pouvant être activée par la chaleur, afin de réaliser une surface collante, caractérisé en ce qu'il est constitué d'une première couche (45, 55) en une résine thermodurcissable pourvue de moyens de renforcement (43, 53) et d'une deuxième couche (42, 52) formée d'une colle à fusion réactive.

6. Corps de renforcement selon la revendication 5 ou 13, caractérisé en ce que la colle à fusion réactive est une résine collante à base d'époxyde, de polyuréthane ou de copolyester.

7. Corps de renforcement plat, à plusieurs couches, dans lequel au moins une couche est constituée d'une résine artificielle durcissant sous l'influence de la chaleur, dans lequel celui-ci présente au moins une couche pouvant être activée par la chaleur, afin de réaliser une surface collante, caractérisé en ce qu'il est constitué par une première couche (45, 55) en une résine thermodurcissable pourvue de moyens de renforcement (43, 53) et d'une deuxième couche (42, 52) formée d'une colle à fusion thermoplastique.

8. Corps de renforcement selon l'une des revendications 1, 5, 6 ou 7, caractérisé en ce que la première couche (2, 12, 45) est constituée par un corps de renforcement plat (9, 23, 43) imprégné par ou immergé dans une résine thermodurcissable.

9. Corps de renforcement selon l'une des revendications 1 à 8, caractérisé en ce que la résine thermodurcissable est un mélange de résine époxyde à un composant éventuellement partiellement prépolymérisée.

10. Corps de renforcement selon la revendication 7, caractérisé en ce que la colle à fusion thermoplastique est un polypropylène modifié, un polyéthylène modifié, un copolyamide ou un copolyester.

11. Corps de renforcement selon la revendication 7 ou 10, caractérisé en ce que la couche (42, 52) de la colle à fusion thermoplastique est une feuille assemblée à la couche de résine (45, 55).

12. Corps de renforcement selon la revendication 11, caractérisé en ce que la feuille est constituée d'un matériau rétractable sous l'influence de la chaleur, qui est pourvu éventuellement de plusieurs fentes.

13. Corps de renforcement selon une ou plusieurs des revendications 1 à 12, caractérisé en ce que les moyens de renforcement comprennent des matières de charges et/ou des nappes de fibres, des tissus, des éléments tressés, des nattes ou éléments analogues.

14. Corps de renforcement selon la revendication 13, caractérisé en ce que les matières de charges sont choisies, séparément ou en combinaison, dans le groupe comprenant le talc, la craie, le mica, la wollastonite, les fibres de verre, les fibres de carbone, les fibres d'aramide, les fibres de jute et les fibres de ramie.

15. Corps de renforcement selon la revendication 8 ou 13, caractérisé en ce que le corps de renforcement plat (9 ; 12 ; 43 ; 53 ; 63 ; 73) ou les nappes de fibres, tissus, produits tressés, nattes ou analogues, sont constitués de verre, d'aramide, de carbone, de jute ou de ramie.

16. Corps de renforcement selon la revendication 13, caractérisé en ce que les moyens de renforcement (53 ; 73) comprennent des nappes de fibre, des tissus, des éléments tressés, des nattes ou éléments analogues en verre, en aramide, en carbone, en jute ou en ramie, appliqués et éventuellement pressés sur la couche (55 ; 75) opposée à l'élément à rendre rigide (67 ; 77) ou sur la surface de la couche (75) du corps de renforcement opposé à cet élément.

17. Corps de renforcement selon la revendication 13, caractérisé en ce que les moyens de renforcement (9 ; 43; 63) comprennent des nappes de fibres, des tissus, des éléments tressés, des nattes ou éléments analogues en verre, aramide, carbone, jute ou ramie, incorporés à la couche (2 ; 12 ; 42 ; 65) du corps de renforcement opposée à l'élément à rendre rigide.

18. Corps de renforcement selon une ou plusieurs des revendications 1 à 17, caractérisé en ce que la surface du corps de renforcement opposé à l'élément à rendre rigide est recouverte par une feuille de protection (44 ; 54 ; 64 ; 74).

19. Corps de renforcement selon la revendication 18, caractérisé en ce que la feuille de protection (44 ; 54; 64; 74) est constituée d'aluminium, de papier ou de polyester.
